# EUROPÄISCHE PATENTANMELDUNG

(11) **EP 4 215 329 A1**
(43) Veröffentlichungstag der Anmeldung: **26.07.2023**
(21) Anmeldenummer: 22152861.5
(22) Anmeldetag: 24.01.2022
(51) Int. Cl.: B29B 17/00, B29B 17/02, B29B 17/04

(54) **VERFAHREN ZUR WIEDERVERWERTUNG VON KUNSTSTOFFRASENSYSTEMEN**

(71) Anmelder: Strabag Sportstättenbau GmbH, 44536 Lünen (DE)
(72) Erfinder: Willmes, Josef, 57392 Schmallenberg (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Verfahren zur Wiederverwertung von Kunststoffrasensystemen, das eine Aufarbeitung und Wiederverwertung des Kunststoffrasens vor Ort erlaubt.

## Beschreibung

Die vorliegende Erfindung betrifft ein Verfahren zur Wiederverwertung von Kunststoffrasensystemen, das eine Aufarbeitung und Wiederverwertung des Kunststoffrasens vor Ort erlaubt.

Kunststoffrasen ist künstlich hergestellter Rasen, der in Beschaffenheit und Aussehen einem Naturrasen nachempfunden ist. Kunststoffrasen, ursprünglich hauptsächlich als Bodenbelag für Sportstätten wie Fußballplätze verwendet, erfreut sich steigender Beliebtheit und kommt in neuerer Zeit auch in anderen gewerblichen Bereichen und im Privatbereich zur Anwendung.

Seit den Anfängen in den 1960er Jahren wurden die Kunststoffrasensysteme stetig weiterentwickelt. Die heute eingesetzten Systeme bestehen in der Regel aus einer Schicht aus beschichteten Kunststofffasern, die in eine Trägerkonstruktion eingebracht werden, welche zur Stabilisierung mit einem Infillmaterial verfüllt wird, wobei das Infillmaterial meist Sand und je nach Art des Kunststoffrasens weitere Bestandteile wie beispielsweise ein Granulat, enthält.

Zu den Vorteilen von Kunststoffrasensystemen zählen zum einen die erhöhte Beanspruchbarkeit und der geringere Pflegeaufwand gegenüber natürlichem Rasen. Auch können die künstlichen Systeme in Umgebungen eingesetzt werden, deren Lichtverhältnisse für natürlichen Rasen ungeeignet sind. Die Nachteile des Kunststoffrasens sind hauptsächlich in der begrenzten Lebensdauer der Systeme zu sehen, deren durchschnittlicher Lebenszyklus zwischen 12 und 15 Jahren liegt.

Durch die stetig wachsende Zahl von Kunststoffrasensystemen steigt der Bedarf nach geeigneten Verfahren zur Aufbereitung und Wiederverwertung der verlegten Systeme.

US 2020/0206980 beschreibt ein Verfahren zum Recycling einer Kunstrasenrolle, wobei eine Kunstrasenrolle verarbeitet wird, um eine Mischung aus Füllmaterial und synthetischen Fasern zu erhalten, das Füllmaterial durch ein oder mehrere Siebe geleitet wird, um die synthetischen Fasern abzutrennen und in einem weiteren Schritt das im Füllmaterial enthaltene Gummi extrahiert wird.

US 2014/0312526 offenbart ein Recyclingverfahren für Kunstrasen mit einer Faserstruktur, umfassend einen Zuführungsschritt eines Kunstrasens, der aus einer Basis, einem Füllstoff und Fasern besteht, einen Trennschritt zum Trennen des Füllstoffs von den Fasern und der Basis des Kunstrasens, einen Zerkleinerungsschritt zum Zerkleinern der Fasern und der Basis des Kunstrasens und einen Reproduktionsschritt, bei dem die zerkleinerten Fasern und die Basis des Kunstrasens als Recyclingmaterial erhalten werden.

Trotz einiger zur Verfügung stehender Verfahren zur Wiederverwertung von Kunststoffrasensystemen ist die eigentliche Wiederverwertung der eingesetzten Materialien eher gering. So basieren die bekannten Verfahren auf einer Linear- oder Recyclingwirtschaft, bei denen Rohstoffe letztendlich zu Abfall werden und aus einem potentiellen Kreislauf ausscheiden. Um den aktuellen Problemen wie die zunehmende Verarbeitung von Rohstoffen und ihren Auswirkungen auf Mensch und Umwelt begegnen zu können, gilt es jedoch einen ganzheitlichen Ansatz bei der Wiederaufbereitung von Kunststoffrasensystemen zu verfolgen, der zur Zeit in der Kreislaufwirtschaft gesehen wird, bei dem der Ressourceneinsatz und die Abfallproduktion durch das Schließen von Materialkreisläufen minimiert werden sollen. Entsprechende gesetzliche Regelungen wurden auf Grundlage der europäischen Abfallrahmenrichtlinie (AbfRRL) entwickelt und spiegeln sich in den Vorgaben des Kreislaufwirtschaftsgesetzes (KrWG) wider, das in einer Abfallhierarchie die Rangfolge verschiedener Abfallbehandlungen festlegt. Die mit dem Aufbau einer Kreislaufwirtschaft für Kunststoffrasensysteme verbundenen Herausforderungen werden von L. Hahn in "Kunststoffrasensysteme in der Kreislaufwirtschaft", erschienen in Neue Landschaft 7/2021, Seite 42-44, beschrieben.

Angesichts der Diskussion der Nachhaltigkeit und der gesetzlichen Vorgaben ist es die Aufgabe der vorliegenden Erfindung, ein Verfahren zur Verfügung zu stellen, bei dem Kunststoffrasensysteme durch entsprechende Aufbereitung und Wiederverwertung der eingesetzten Materialien in einen Wertstoffkreislauf integriert werden können.

Es hat sich überraschenderweise gezeigt, dass diese Aufgabe durch ein Verfahren zur Wiederverwertung von Kunststoffrasensystemen gelöst wird, das eine Trennung der einzelnen Komponenten des Kunststoffrasensystems vor Ort und somit eine direkte Weiterverarbeitung erlaubt.

Entsprechend bezieht sich die vorliegende Erfindung auf ein Verfahren zur Wiederverwertung von Kunststoffrasensystemen mit einer Trägerkonstruktion mit Kunststofffasern und einem Infillmaterial umfassend Sand, wobei sich das Verfahren dadurch auszeichnet, dass
a) das verlegte Kunststoffrasensystem aufgenommen und das Infillmaterial von der Trägerkonstruktion getrennt wird;
b) der Sand aus dem Infillmaterial vor Ort abgetrennt wird; und
c) der abgetrennte Sand wenigstens teilweise direkt wieder als Infillmaterial für Kunststoffrasensysteme verwendet wird.

Dadurch, dass der im Infillmaterial vorhandene Sand direkt vor Ort, also an dem Ort, an dem das Kunststoffrasensystem erneuert werden soll, abgetrennt und zumindest teilweise direkt wieder als Infillmaterial für das neue Kunststoffrasensystem verwendet wird, kann ein Kreislaufsystem aufgebaut werden, wodurch nicht nur Material gespart werden kann, sondern auch der mit dem Transport von neuem Sand verbundene Energie- und Kostenaufwand entfällt. Das erfindungsgemäße Verfahren leistet somit einen wertvollen Beitrag zur Nachhaltigkeit von Kunststoffrasensystemen.

Das erfindungsgemäße Verfahren sieht in einem ersten Schritt vor, dass das zu ersetzende Kunststoffrasensystem aufgenommen und Infillmaterial und Trägerkonstruktion voneinander getrennt werden. Dies kann beispielsweise dadurch Anheben und Rütteln des Kunststoffrasens erfolgen. Daher ist eine Ausführungsform des erfindungsgemäßen Verfahrens bevorzugt, in der der Kunststoffrasen angehoben, gewendet und gerüttelt und das Infillmaterial in einem Auffangbehälter aufgefangen wird. In einer weiterhin bevorzugten Ausführungsform kann der angehobene Kunststoffrasen zur besseren Handhabbarkeit in Streifen geschnitten und die Streifen einzeln gewendet und gerüttelt werden, wobei das Infillmaterial vorzugsweise in einem gemeinsamen Auffangbehälter gesammelt wird.

Kunststoffrasensysteme werden in der Regel zur Stabilisierung mit einem Infillmaterial verfüllt, das als mindestens eine Komponente Sand umfasst. Je nach Anforderungen an das Kunststoffrasensystem kann das Infillmaterial neben Sand weitere Komponenten, meist in Form eines Granulats, aufweisen. Daher ist eine Ausführungsform des erfindungsgemäßen Verfahrens bevorzugt, bei der sich das Infillmaterial aus Sand und einem Granulat zusammensetzt, wobei das Granulat vorzugsweise aus der Gruppe ausgewählt ist, die aus Styrol-Butadien-Kautschuk (SBR), Polyurethan (PUR)-umhüllten SBR, Ethylen-Propylen-Dien-Kautschuk (EPDM), thermoplastische Elastomere (TPE), Naturkautschuk und organische Füllmaterialien besteht. Besonders bevorzugt handelt es sich bei dem Granulat um vulkanisierte Natur- oder Synthesekautschuke (Gummi).

Das erfindungsgemäße Verfahren sieht vor, dass der Sand aus dem Infillmaterial vor Ort abgetrennt wird. In dieser Beziehung hat sich ein mobiles Reinigungssystem als besonders vorteilhaft erwiesen. Das in der Praxis bekannte Siebverfahren hat sich im Rahmen des erfindungsgemäßen Verfahrens dagegen als weniger vorteilhaft erwiesen. Vielmehr konnten überraschenderweise gute Ergebnisse, insbesondere bezüglich der Reinheit des erhaltenen Sands, erzielt werden, wenn zur Abtrennung und Reinigung ein Spiraltechnikverfahren eingesetzt wurde. Daher ist eine Ausführungsform bevorzugt, in der das Infillmaterial über ein mobiles Reinigungssystem mit Spiraltechnik unter Zugabe von Wasser getrennt wird.

Der im Rahmen des erfindungsgemäßen Verfahrens erhaltene Sand soll direkt wieder als Infillmaterial verwendet werden. Daher ist es wünschenswert, dass der Sand eine hohe Reinheit aufweist, um eine zusätzliche Belastung der Umwelt zu vermeiden. Entsprechend ist eine Ausführungsform bevorzugt, in der der aus dem Infillmaterial abgetrennte Sand eine Reinheit von mindestens 98%, vorzugsweise mindestens 99% aufweist. Um dies zu erreichen, umfasst die Auftrennung des Infillmaterials in einer bevorzugten Ausführungsform mehr als einen Durchgang.

Das erfindungsgemäße Verfahren steht im Zeichen der Nachhaltigkeit. Entsprechend wird das für die Trennung des Infillmaterials verwendete Wasser vorzugsweise so dosiert, dass keine zusätzliche Belastung der Umgebung entsteht. In einer besonders bevorzugten Ausführungsform wird das bei der Trennung entstehende Brauchwasser dem Drainagesystem des Kunststoffrasenplatzes zugeführt.

Der aus dem Infillmaterial abgetrennte Sand wird erfindungsgemäß wenigstens teilweise, vorzugsweise ganz, als Infillmaterial für das neue Kunststoffrasensystem verwendet. Herkömmliche Verfahren weisen den Nachteil auf, dass das vom Infillmaterial eventuell verbleibende Granulat in der Regel für einen weiteren Einsatz als Infillmaterial nicht geeignet ist und als Abfall entsorgt werden muss. Im Rahmen des erfindungsgemäßen Verfahrens jedoch wurde überraschend gefunden, dass das Granulat anderen Verwendungen zugeführt und so in den Wertstoffkreislauf integriert werden kann. So kann das Granulat beispielsweise zu Dämmmaterial weiterverarbeitet werden. Daher ist eine Ausführungsform bevorzugt, in der das nach der Abtrennung des Sands in Schritt b) des erfindungsgemäßen Verfahrens verbleibende Infillmaterial dem Wertschöpfungskreislauf wieder zugeführt wird.

In einer bevorzugten Ausführungsform sieht das erfindungsgemäße Verfahren ebenfalls die Weiterverarbeitung der in Schritt a) erhaltenen Trägerkonstruktion vor, um so einen effektiven Kreislauf in Bezug auf Kunststoffrasensysteme zu erreichen. Daher wird in einer bevorzugten Ausführungsform die abgetrennte Trägerkonstruktion zusammen mit den Kunststofffasern geschreddert. Für das so erhaltene Material bieten sich eine Reihe von Einsatzmöglichkeiten.

Das erfindungsgemäße Verfahren erlaubt somit eine Wiederverwendung aller ursprünglich für das Kunststoffrasensystem eingesetzten Materialien. Darüber hinaus kann das erfindungsgemäße Verfahren direkt vor Ort durchgeführt werden, so dass Transport und Lagerung im Rahmen der Wiederverwertung entfallen.

## Patentansprüche

1. Verfahren zur Wiederverwertung von Kunststoffrasensystemen aus einer Trägerkonstruktion mit Kunststofffasern und einem Infillmaterial umfassend Sand, **dadurch gekennzeichnet, dass**
a) der verlegte Kunststoffrasen aufgenommen und das Infillmaterial von der Trägerkonstruktion getrennt wird;
b) der Sand aus dem Infillmaterial vor Ort abgetrennt wird; und
c) der Sand wenigstens teilweise direkt wieder als Infillmaterial für Kunststoffrasensysteme verwendet wird.

2. Verfahren gemäß Anspruch 1, **dadurch gekennzeichnet, dass** zur Trennung des Infillmaterials und der Trägerkonstruktion in Schritt a) der Kunststoffrasen angehoben, gewendet und gerüttelt wird, um das Infillmaterial in einem Auffangbehälter aufzufangen.

3. Verfahren gemäß Anspruch 2, **dadurch gekennzeichnet, dass** der Kunststoffrasen in Streifen geschnitten und die Streifen einzeln gewendet und gerüttelt werden.

4. Verfahren gemäß wenigstens einem der vorangehenden Ansprüche, **dadurch gekennzeichnet, dass** das Infillmaterial Sand und ein Granulat umfasst, wobei das Granulat ausgewählt ist aus der Gruppe, die aus Styrol-Butadien-Kautschuk (SBR), Polyurethan (PUR)-umhüllten SBR, Ethylen-Propylen-Dien-Kautschuk (EPDM), thermoplastische Elastomere (TPE), Naturkautschuk und organische Füllmaterialien besteht.

5. Verfahren gemäß wenigstens einem der vorangehenden Ansprüche, **dadurch gekennzeichnet, dass** das Infillmaterial über ein mobiles Reinigungssystem mit Spiraltechnik unter Zugabe von Wasser getrennt wird.

6. Verfahren gemäß Anspruch 5, **dadurch gekennzeichnet, dass** die Auftrennung des Infillmaterials mindestens einen Durchgang umfasst.

7. Verfahren gemäß wenigstens einem der vorangehenden Ansprüche, **dadurch gekennzeichnet, dass** der aus dem Infillmaterial abgetrennte Sand eine Reinheit von mindestens 98%, vorzugsweise 99% aufweist.

8. Verfahren gemäß Anspruch 5, **dadurch gekennzeichnet, dass** das entstehende Brauchwasser dem Drainagesystem des Kunststoffrasenplatzes zugeführt wird.

9. Verfahren gemäß wenigstens einem der vorangehenden Ansprüche, **dadurch gekennzeichnet, dass** das nach der Abtrennung des Sandes verbleibende Infillmaterial wieder dem Wertschöpfungskreislauf zugeführt wird.

10. Verfahren gemäß Anspruch 9, **dadurch gekennzeichnet, dass** es sich bei dem nach der Abtrennung des Sands verbleibenden Infillmaterial um Granulat und gegebenenfalls Rasenfaserreste handelt.

11. Verfahren gemäß wenigstens einem der vorangehenden Ansprüche, **dadurch gekennzeichnet, dass** die abgetrennte Trägerkonstruktion zusammen mit den Rasenfasern geschreddert wird.
